# EUROPEAN PATENT APPLICATION

(11) **EP 4 418 191 A1**
(43) Date of publication of application: **21.08.2024**
(21) Application number: 21960668.8
(22) Date of filing: 15.10.2021
(51) Int. Cl.: G06Q 30/06, G06Q 50/04

(54) **PRODUCTION EQUIPMENT SHARING SYSTEM, AND PRODUCTION EQUIPMENT SHARING METHOD**

(71) Applicant: Fuji Corporation, Chiryu-shi, Aichi 472-8686 (JP)
(72) Inventor: NAGASAKA Nobuo, Chiryu-shi, Aichi 472-8686 (JP)
(74) Representative: Grünecker Patent- und Rechtsanwälte PartG mbB
(86) International application number: PCT/JP2021/038204
(87) International publication number: WO 2023/062812

(57) **Abstract**

In order to achieve both an increase in production in a peak period and an increase in an operating rate of the production equipment by sharing the production equipment by multiple manufacturers, a production equipment sharing system includes a rental management section provided in a management server and configured to perform rental processing of renting first production equipment from an owner who owns the first production equipment to a user who remotely uses the first production equipment, and a billing processing section provided in the management server and configured to perform billing processing of paying a usage fee from the user to the owner based on the rental of the first production equipment.

## Description

### Technical Field

The present description relates to a production equipment sharing system and a production equipment sharing method.

### Background Art

In general, a manufacturer who produces a product such as a substrate on which an electronic component is mounted owns production equipment in his/her factory and produces the product using the production equipment. In addition, the manufacturer prepares the production equipment in accordance with a production amount for producing the product, and when the maximum production amount in a peak period is large, for example, prepares multiple production equipment capable of producing the product simultaneously and in parallel.

Meanwhile, when the manufacturer needs to prepare the production equipment in accordance with the maximum production amount in the peak period, the number of non-operating production equipment increases when the production amount is small, and the burden of equipment investment may increase. Here, in order to reduce the burden of equipment investment, it is conceivable that the manufacturer reduces the number of production equipment to be owned and rents necessary production equipment from a lease company to install the equipment in his/her factory. In this case, the manufacturer pays a rental fee based on an operating time of rental equipment or the like to the lease company (for example, see Patent Literature 1). With this rent method, the manufacturer can perform product production in accordance with the maximum production amount in the peak period with a small investment burden.

### Patent Literature

Patent Literature 1: WO 2018/229900

### Summary of the Invention

### Technical Problem

However, when the rental equipment is installed in the factory of the manufacturer as described above, it is necessary to prepare a space for installing the rental equipment in the factory of the manufacturer. Therefore, a manufacturer still has a large investment burden, and in particular, a manufacturer who cannot secure a wide factory space can originally prepare a space for installing rental equipment, and it is difficult to increase the production in accordance with the maximum production amount in the peak period.

Meanwhile, a manufacturer who owns multiple production equipment can increase the production in accordance with the maximum production amount in the peak period, but an operating rate of production equipment decreases during an off-period, there is a need for measures to increase the operating rate.

An object of the present description is to provide a production equipment sharing system and a production equipment sharing method that achieve both an increase in production in a peak period and an increase in an operating rate of the production equipment in an off-period by causing multiple manufacturers to appropriately share the production equipment.

### Solution to Problem

According to the present description, there is provided a production equipment sharing system including: a rental management section provided in a management server and configured to perform rental processing of renting first production equipment from an owner who owns the first production equipment to a user who remotely uses the first production equipment; and a billing processing section provided in the management server and configured to perform billing processing of paying a usage fee from the user to the owner based on the rental of the first production equipment.

Further, according to the present description, there is provided a production equipment sharing method including: a first step in which a management server performs rental processing of renting first production equipment from an owner who owns the first production equipment to a user who remotely uses the first production equipment; and a second step in which the management server performs billing processing of paying a usage fee from the user to the owner based on the rental of the first production equipment.

According to the present description, by causing multiple manufacturers to share the production equipment, it is possible to achieve both an increase in production of a peak period and an increase in an operating rate of the production equipment.

### Brief Description of Drawings

Fig. 1 is a configuration diagram of production equipment which is a sharing target by a production equipment sharing system according to one embodiment.
Fig. 2 is a top view of a component mounter provided in the production equipment.
Fig. 3 is a diagram illustrating a system configuration necessary for a user to use production equipment owned by an owner.
Fig. 4 is a configuration diagram of a production equipment sharing system that associates an owner and a user.

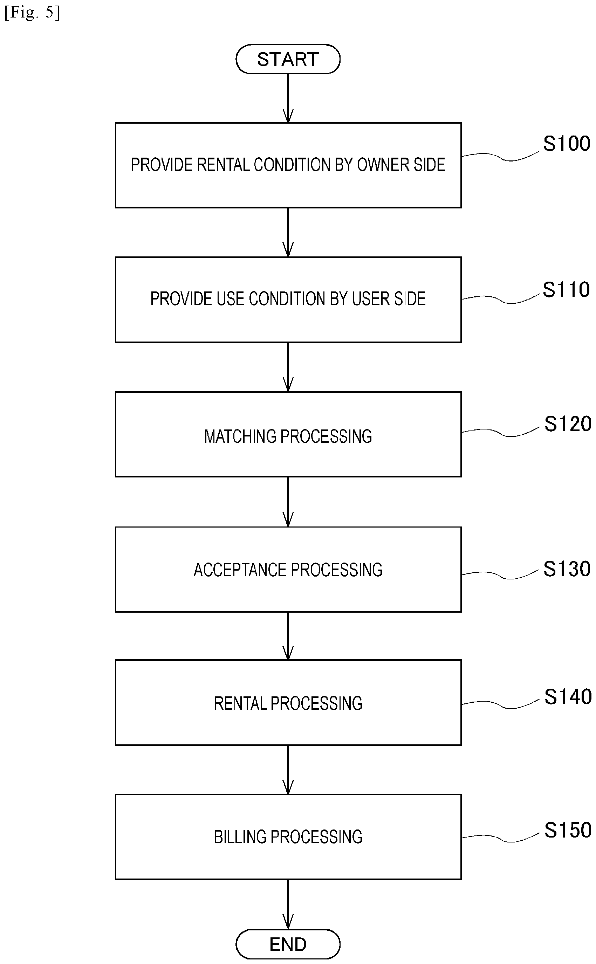

Fig. 5 is a flowchart of an example executed in the production equipment sharing system.

### Description of Embodiments

A production equipment sharing system according to one embodiment will be described.

### 1. Configuration of Production Equipment Sharing System

Production equipment sharing system 1 is a system in which an owner who owns production equipment 10 rents production equipment 10 for charge to a user who wants to use production equipment 10 to share production equipment 10.

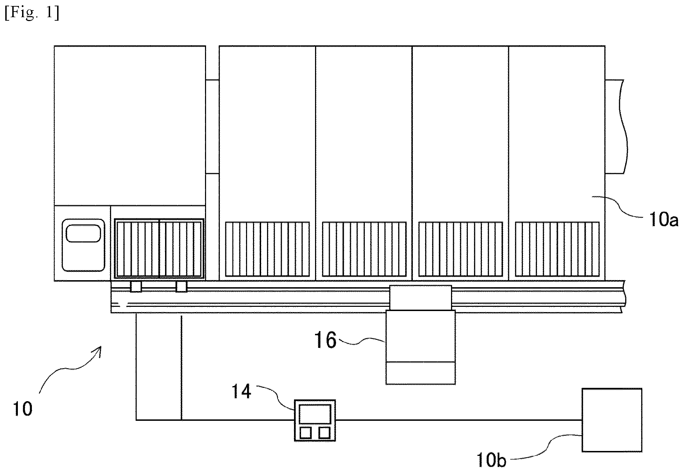

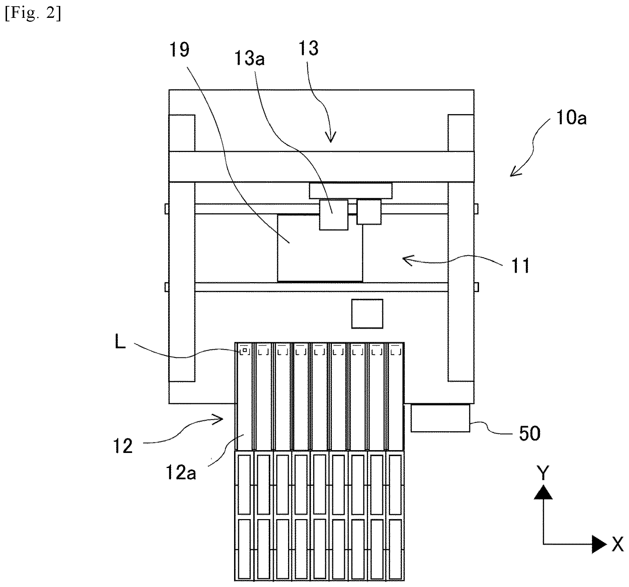

As illustrated in Figs. 1 and 2, production equipment 10 caused to be shared in production equipment sharing system 1 is equipment for producing a product, for example, equipment for producing substrate 19 on which an electronic component is mounted. Production equipment 10 includes, for example, a substrate work machine for directly or indirectly performing a predetermined work on substrate 19 to be produced, and particularly includes component mounter 10a for mounting an electronic component on substrate 19.

Hereinafter, it is assumed that production equipment 10 indicates an entire production line in which multiple types of substrate work machines are arranged in series. The owner may own multiple production equipment 10 including the same type or different types of production lines. In addition to component mounter 10a, the multiple types of substrate work machines include a printing machine, a printing inspection machine, a reflow oven, an appearance inspection machine, a function inspection machine, a buffer device, a substrate supply device, a substrate reversing device, a shield mounting device, an adhesive application device, an ultraviolet ray irradiation device, or the like as necessary. In addition, production equipment 10 may include a station that is disposed adjacent to component mounter 10a and temporarily stores the electronic component or the like to be mounted on substrate 19, warehouse 10b (see Fig. 1) that is disposed at a position away from component mounter 10a and accommodates various articles such as substrate 19 and the component, and the like. Production equipment 10 may include conveyance unit 14 and moving device 16 that convey products and components.

Component mounter 10a, which is production equipment 10, performs carry-in work, position determination work, and carry-out work of substrate 19, and performs supply work, collection work, and mounting work of electronic components in association with work on substrate 19. Component mounter 10a mounts multiple electronic components on substrate 19 which is carried in and positioned at a predetermined position, and carries out substrate 19 on which the electronic components are mounted. As illustrated in Fig. 2, component mounter 10a includes substrate conveyance section 11 that conveys substrate 19, component supply section 12 that supplies an electronic component to be mounted on substrate 19 to component supply position L, and component transfer section 13 that transfers the electronic component supplied to component supply position L to substrate 19.

Substrate conveyance section 11 rotates a conveyor belt by an electric motor or the like, and conveys substrate 19 in conveyance direction X while guiding substrate 19 along a pair of guide rails arranged in parallel to each other with a gap therebetween. Then, substrate conveyance section 11 clamps substrate 19 at a component mounting position by a clamp device.

Component supply section 12 includes feeder 12a that accommodates the electronic components. Feeder 12a is detachably held in each of multiple slots arranged along the conveyance direction of the substrate. Feeder 12a can supply the accommodated electronic components to component supply position L in a Y direction in a state of being held in the slot. The slot may include an upper slot that holds feeder 12a in an operable manner, and a lower slot that preliminarily holds feeder 12a for use in production or temporarily holds the used feeder 12a used in production.

Component transfer section 13 includes mounting head 13a that transfers the electronic component. Mounting head 13a is movable in a horizontal direction and movable in an up-down direction. Mounting head 13a is provided with a gripping section capable of gripping the electronic component by pickup or chuck. Mounting head 13a and the gripping section have a shape and a size corresponding to the size and weight of the electronic component which is a grip target. Mounting head 13a moves to the component mounting position where substrate 19 is located in a state where the gripping section grips the electronic component supplied to component supply position L of feeder 12a, and transfers the electronic component to substrate 19 when the gripping by the gripping section is released.

In addition, warehouse 10b is, for example, a tower-type automatic warehouse that accommodates and stores articles such as substrates, feeders 12a, and electronic components that are used by being delivered to a factory in which component mounter 10a and the like are installed. The work of storing an article into warehouse 10b and the work of delivering the article from warehouse 10b are automatically performed by a worker or using an actuator such as a robot arm. Between warehouse 10b and the substrate work machine including component mounter 10a, feeder 12a can be delivered at least by using conveyance unit 14 such as an AGV movable therebetween. In the same production equipment 10 (that is, between multiple substrate work machines or in substrate work machine), components can be moved using moving device 16.

When multiple production equipment 10 that is the production line is provided, multiple warehouses 10b may be provided corresponding to the number of production equipment 10, and may be dedicated warehouses provided for each production equipment 10. When warehouse 10b is a dedicated warehouse as described above, warehouse 10b installed in the owner's factory and used by the user as described later may be a rental item rented by the user.

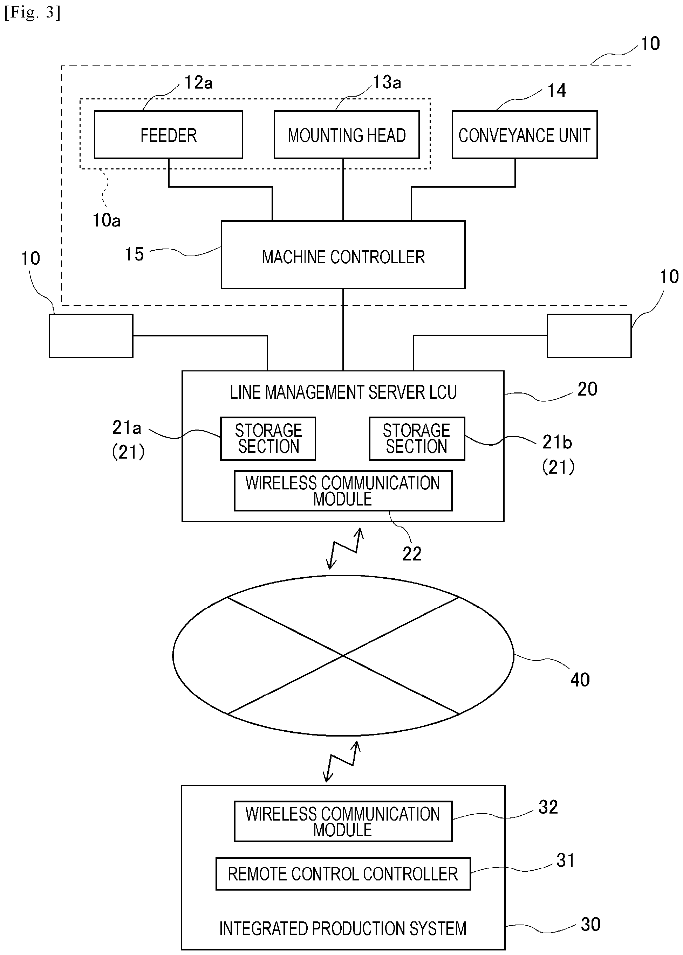

As illustrated in Fig. 3, production equipment 10 includes machine controller 15. Machine controller 15 is a controller that controls operations of feeder 12a, mounting head 13a, and conveyance unit 14 of component mounter 10a based on image data or the like by a substrate camera, a part camera, or the like installed in component mounter 10a. In addition, machine controller 15 can cause the display section to display an operation status of component mounter 10a and the like to the worker. Machine controller 15 mainly includes a computer provided with CPU, ROM, RAM, and the like.

Machine controller 15 of each production equipment 10 is connected to line management server LCU 20. Line management server LCU 20 is a host computer that is owned by an owner and manages and controls all production equipment 10 installed in the owner's company. Line management server LCU 20 manages a production plan using each production equipment 10, an operation status of each production equipment 10, substrate production, and component supply.

Line management server LCU 20 may manage information for each production equipment 10. In particular, line management server LCU 20 individually managing production equipment 10 used by the owner himself/herself and production equipment 10 rented from the owner to the user and used by the user is suitable for ensuring high confidentiality between the owner and the user. In the individual management for each production equipment 10, it is preferable that line management server LCU 20 manages production equipment 10 which is used by being rented to the user by the owner through high-speed large-capacity wireless communication network 40 described later.

The production plans include production plans of multiple types of substrates 19 over a predetermined period of time (for example, one week or one month) and also include usage plans indicating the types and number of components 3 to be used in accordance with the production plan of substrate 19. The production plan includes not only a plan in which the owner himself/herself produces a product using production equipment 10, but also a plan in which the product is produced using production equipment 10 rented to the user. These production plans may be sequentially updated.

Line management server LCU 20 includes storage section 21. Storage section 21 is a section that stores a production plan of substrate 19 and a usage plan of a component. Storage section 21 may be divided into storage section 21a that stores the production plan of the owner who owns production equipment 10, and storage section 21b that stores the production plan of the user who uses production equipment 10. In this case, line management server LCU 20 preferably manages information to be stored in storage section 21b by high-speed large-capacity wireless communication network 40 (hereinafter, simply referred to as wireless communication network 40) described later.

Line management server LCU 20 issues a production command according to the production plan stored in storage section 21 to machine controller 15 of each production equipment 10. Machine controller 15 stores a relationship between a production command and a used device or a used component used in response to the production command. Upon receiving the production command from line management server LCU 20, machine controller 15 of each production equipment 10 performs substrate production according to the production command.

Line management server LCU 20 includes wireless communication module 22. Wireless communication module 22 is a device connected to the outside in a wireless communication manner via wireless communication network 40. Line management server LCU 20 can be connected to wireless communication network 40 using wireless communication module 22 to be communicably connected to integrated production system 30 on the user side using production equipment 10 of the owner. Wireless communication module 22 may be detachably attached to line management server LCU 20, and may be a mobile device that is owned by a user and that is transmitted from the user who uses production equipment 10 and attached to line management server LCU 20.

Wireless communication network 40 is a 5G communication network system or a 6G communication network system corresponding to a wireless system of a 5G communication standard or a 6G communication standard. Wireless communication network 40 is, for example, a network capable of performing communication with high speed, large capacity, low delay, and multiple simultaneous connection using a high frequency band of 400 MHz.

Line management server LCU 20 can receive information such as the production plan on the user side transmitted from integrated production system 30 on the user side via wireless communication network 40 by wireless communication module 22 and store the information in storage section 21b, and can transmit information such as an operation status of production equipment 10 from wireless communication module 22 to integrated production system 30 on the user side via wireless communication network 40.

Integrated production system 30 is a system that is owned by a user and can remotely control at least production equipment 10 owned by the owner. Integrated production system 30 of the present embodiment is also a system capable of managing and controlling production equipment 10 owned by the user. Integrated production system 30 includes remote control controller 31 and wireless communication module 32.

Remote control controller 31 is a controller that remotely controls production equipment 10 rented by the owner. Remote control controller 31 manages the production plan of the product by the user using production equipment 10 of the owner, the operation status of production equipment 10, the substrate production, and the component supply. Remote control controller 31 may also serve as a machine controller that controls operations of feeder 12a, mounting head 13a, and conveyance unit 14 of component mounter 10a based on image data or the like by a substrate camera, a part camera, or the like installed in component mounter 10a of production equipment 10 owned by the user. Remote control controller 31 mainly includes a computer provided with CPU, ROM, RAM, and the like.

Wireless communication module 32 is a device connected to the outside in a wireless communication manner via wireless communication network 40. Specifically, wireless communication module 32 can be connected to wireless communication module 22 of line management server LCU 20 on the owner side in a wireless communication manner via wireless communication network 40.

Remote control controller 31 can be connected to wireless communication network 40 using wireless communication module 32 to be communicably connected to line management server LCU 20 of the owner. Remote control controller 31 can transmit information such as a production plan on the user side from wireless communication module 32 to wireless communication module 22 of line management server LCU 20 on the owner side, and can receive the information such as the operation status of production equipment 10 transmitted from wireless communication module 22 of line management server LCU 20 on the owner side by wireless communication module 32. Remote control controller 31 is remotely connected to machine controller 15 of the owner through the encrypted communication to remotely control production equipment 10 of the owner.

The owner who owns production equipment 10 is generally a manufacturer who produces the product using production equipment 10, but may be a person who rents production equipment 10 owned by the manufacturer to another person (another company) or a person who borrows production equipment 10 owned by the manufacturer and has a right to use production equipment 10. In addition, the user who uses production equipment 10 is generally the manufacturer who produces the product using production equipment 10 owned by the user (own company), such as the same business company as the owner who is the manufacturer, except for the owner of production equipment 10, but may be a person who borrows production equipment 10 from the owner of production equipment 10 and lends production equipment 10 to another person.

The owner of production equipment 10 may be a user who borrows production equipment 10 of another person to produce a product, and the user who uses production equipment 10 of another person may be the owner who uses production equipment 10 owned by the user to produce the product. Hereinafter, for convenience, the owner of production equipment 10 may be referred to as owner C1, and a user of production equipment 10 owned by owner C1 different from owner C1 may be referred to as user C2.

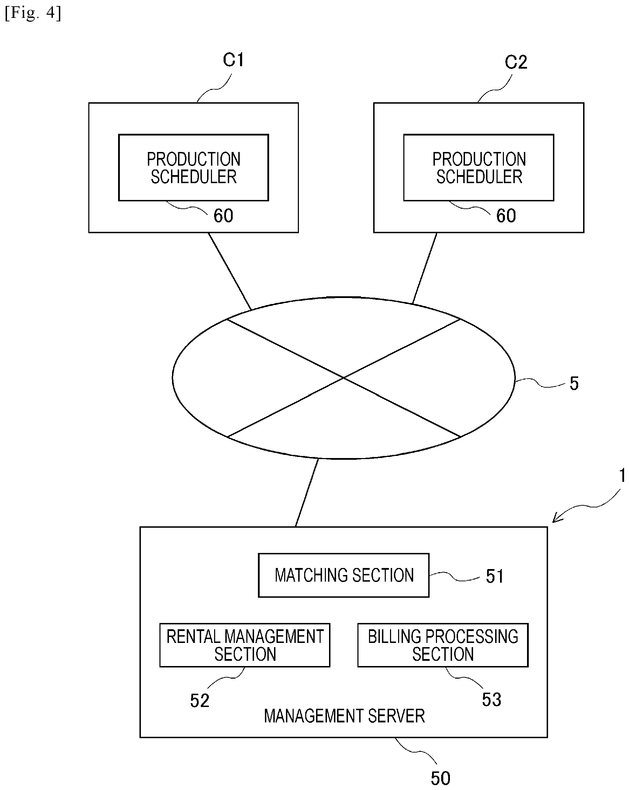

As illustrated in Fig. 4, production equipment sharing system 1 can perform a matching processing of associating owner C1 and user C2 of production equipment 10. Production equipment sharing system 1 is operated by, for example, an operator such as a device manufacturer that manufactures production equipment 10 or a related operator or an industry organization related to owner C 1, user C2, the device manufacturer, or the like, other than owner C1 and user C2 of production equipment 10. Production equipment sharing system 1 is operated and managed using management server 50 installed in the operator.

Production equipment sharing system 1 includes matching section 51, rental management section 52, and billing processing section 53. Matching section 51, rental management section 52, and billing processing section 53 are provided in management server 50.

Matching section 51 is a section that performs matching processing of associating owner C1 of production equipment 10 and user C2 who intends to use production equipment 10. Matching section 51 performs the matching processing based on the information provided from owner C1 of production equipment 10 and the information provided from user C2 who intends to use production equipment 10. Owner C1 and user C2 of production equipment 10 each have production scheduler 60.

Production scheduler 60 of owner C1 has the operation status of production equipment 10 owned by owner C1 and the production plan of the product. The production plan is created based on an order quantity, an order prediction, or the like of the product held by owner C1, and varies according to the order quantity or the like. Production scheduler 60 of owner C1 can generate information of production equipment 10 (hereinafter, referred to as surplus production equipment 10) which is not used in product production by owner C1 among all production equipment 10 owned by owner C1 based on the operation status or the production plan of production equipment 10. The information of surplus production equipment 10 includes a model of surplus production equipment 10, a type of a product that can be produced by surplus production equipment 10, a period in which owner C1 does not use surplus production equipment 10, that is, a period in which surplus production equipment 10 can be rented to another person, a desired rental fee unit price when surplus production equipment 10 is rented to another person, and the like.

The server of owner C1 can provide the information generated by production scheduler 60 to management server 50 via communication network 5 as a rental condition for renting production equipment 10 owned by owner C1 to another person. The rental condition to be provided may include information of user C2 who is allowed or prohibited from renting production equipment 10 to owner C1.

Production scheduler 60 of user C2 has the operation status of production equipment 10 owned by user C2 and the production plan of the product. The production plan is created based on an order quantity, an order prediction, or the like of the product of user C2, and varies according to the order quantity or the like. Production scheduler 60 of user C2 can generate information on the amount of products (hereinafter, referred to as a production difficulty amount) that cannot be produced only by production equipment 10 owned by user C2, based on the operation status and the production plan of production equipment 10. The information of the production difficulty amount includes a type of the product, a period during which the product cannot be produced or an amount of the product that cannot be produced, a desired rental fee unit price when the production equipment is borrowed from another person, and the like.

The server of user C2 can provide management server 50 via communication network 5 with the information generated by production scheduler 60 as a use condition for using production equipment 10 owned by another person. The use condition to be provided may include information of owner C1 from whom user C2 is allowed to borrow production equipment 10 or from whom user C2 is prohibited from borrowing production equipment 10.

Management server 50 can receive information provided from each of owner C1 and user C2 via communication network 5. Management server 50 can receive and store information from each of multiple owners C1 and multiple users C2. Matching section 51 of management server 50 determines user C2 who is to use surplus production equipment 10 owned by owner C1 based on the received information provided by owner C1 and the received information provided by user C2, and performs matching processing of associating owner C1 of surplus production equipment 10 and the user.

The matching processing by matching section 51 is processing of associating owner C1 and user C2 with each other in which the rental condition of owner C1 side and the use condition of user C2 side are matched with each other as a result of collation of the rental condition and the use condition. For example, in a case where the type of a product difficult to produce defined in the use condition of user C2 side is included in the types of products that can be produced by surplus production equipment 10 defined in the rental condition of owner C1 side, and a part or all of the period in which the product defined in the use condition of user C2 side cannot be produced is included in the period in which owner C1 does not use surplus production equipment 10 defined in the rental condition of owner C1 side, owner C1 and user C2 are associated with each other.

For example, in a case where there are multiple candidates of user C2 who are likely to be associated with one owner C1, among the multiple candidates, a candidate having a long period in which a period in which the product defined in the use condition cannot be produced and a period in which surplus production equipment 10 defined in the rental condition of owner C1 side is not used by owner C1 overlap may be set as user C2 and associated with owner C1. Alternatively, in the above case, a person selected by owner C1 from among multiple candidates may be set as user C2 and may be associated with owner C1. With this method, it is possible to allow owner C1 to select user C2 from among multiple candidates based on a use condition including a fee, and it becomes possible to select user C2 to whom production equipment 10 can be rented under a favorable condition for owner C1.

In addition, in a case where there are multiple candidates of owner C1 who are likely to be associated with one user C2, among the multiple candidates, a candidate having a long period in which a period in which owner C1 does not use surplus production equipment 10 defined in the rental condition and a period in which a product defined in the use condition of user C2 side cannot be produced overlap may be set as owner C1 and may be associated with user C2. Alternatively, in the above case, a person selected by user C2 from among multiple candidates may be set as owner C1 and may be associated with user C2. With this method, it is possible to cause user C2 to select owner C1 from among multiple candidates based on a rental condition including a fee or the like, and it is possible to select owner C1 having production equipment 10 to be rented to user C2 under a favorable condition.

After matching section 51 performs the matching processing to associate owner C1 and user C2 with each other, management server 50 transmits information described later to owner C1 and user C2 via communication network 5. The information transmitted from management server 50 to owner C1 is information for requesting owner C1 to accept whether to permit the use by user C2, including the use condition of user C2 who intends to use surplus production equipment 10 owned by owner C1. In addition, the information transmitted from management server 50 to user C2 is information for requesting user C2 to accept whether to use surplus production equipment 10 of owner C1, including the rental condition or the like of owner C1 who owns surplus production equipment 10 to be used by user C2.

After the server of owner C1 is requested to accept whether to permit the use by user C2 from management server 50 in response to the rental condition of surplus production equipment 10 provided to management server 50 by owner C1, the server of owner C1 returns information indicating the acceptance to management server 50. After the server of user C2 is requested to accept whether to use surplus production equipment 10 of owner C1 from management server 50 in response to the use condition provided to management server 50 by user C2, the server of user C2 returns information indicating the acceptance to management server 50.

Rental management section 52 of management server 50 is a section that performs rental processing of renting surplus production equipment 10 of owner C1 from owner C1 to user C2. In a case where the above acceptance is obtained from both owner C1 and user C2 associated by the matching processing in matching section 51, rental management section 52 performs the above rental processing on the assumption that a contract for renting production equipment 10 owned by owner C1 to user C2 is established between owner C1 and user C2.

The rental processing by rental management section 52 is processing necessary for renting surplus production equipment 10 of owner C1 to user C2 to be used between owner C1 and user C2 associated by the matching processing. Specifically, the rental processing is processing for remotely connecting remote control controller 31 owned by user C2 to machine controller 15 that controls production equipment 10 owned by owner C1 and causing remote control controller 31 of user C2 to remotely control surplus production equipment 10 of owner C1.

Machine controller 15 of owner C1 and remote control controller 31 of user C2 are communicably connected to each other using wireless communication network 40, and can be remotely connected to each other by encrypted communication.

Billing processing section 53 of management server 50 is a section that performs billing processing of paying, from user C2 to owner C1, a usage fee based on the rent of surplus production equipment 10 owned by owner C1 to user C2. After the acceptance is obtained from both owner C1 and user C2 associated by the matching processing in matching section 51, billing processing section 53 performs the billing processing in response to rental management section 52 performing the rental processing.

The billing processing performed by billing processing section 53 is processing necessary for user C2 to pay a usage fee associated with the rent of surplus production equipment 10 to owner C1 between owner C1 and user C2 associated by the matching processing, and includes, for example, issuance of an invoice, payment by credit card, or the like.

The usage fee associated with the rental of surplus production equipment 10 from user C2 to owner C1 may be determined based on a rental period of production equipment 10, an operation load during the rental, an operating time, the number of times of operation, an operation speed, a planned production number of products, an actual production number, or the like. Further, the usage fee may be obtained by adding an amount of money corresponding to the operation during the rental to a basic fee. In addition, the usage fee may be a fee including a degree of consumption of a consumable item when product production is performed by production equipment 10, a work amount of an on-site worker, a periodic maintenance fee, and the like.

### 2. Operation of Production Equipment Sharing System

The server of owner C1 who owns production equipment 10 provides the rental condition including the information generated by production scheduler 60 to management server 50 via communication network 5 (Step S100). The server of user C2 who intends to use production equipment 10 owned by another person provides the use condition including the information generated by production scheduler 60 to management server 50 via communication network 5 (Step S110).

When management server 50 receives the rental condition provided from owner C1 and the use condition provided from user C2, matching section 51 collates the rental condition and the use condition with each other, determines user C2 who is to use surplus production equipment 10 owned by owner C1, and performs a matching processing of associating owner C1 of surplus production equipment 10 and the user (Step S120).

After owner C1 and user C2 are associated with each other by the matching processing in matching section 51, management server 50 transmits, to owner C1, information requesting acceptance as to whether to permit the use by user C2, and transmits, to user C2, information requesting acceptance as to whether to use surplus production equipment 10 of owner C1 (Step S130). The server of owner C1 returns information indicating whether the acceptance is granted to management server 50 in response to the acceptance request from management server 50. The server of user C2 returns information indicating whether the acceptance is granted to management server 50 in response to the acceptance request from management server 50.

After owner C1 and user C2 are associated with each other by the matching processing in matching section 51, in a case where the acceptance is obtained in response to the acceptance request to owner C1 and the acceptance is obtained in response to the acceptance request to user C2, management server 50 performs the rental processing of renting surplus production equipment 10 of owner C1 from owner C1 to user C2 in rental management section 52 (Step S140). In addition, billing processing section 53 performs billing processing of paying a usage fee based on the rental from user C2 to owner C1 (Step S150).

As described above, when the above-described rental processing and the above-described billing processing are performed between owner C1 and user C2 in production equipment sharing system 1, management server 50 transmits information including the condition for user C2 to use surplus production equipment 10 owned by owner C1 to the server of owner C1 and the server of user C2 via communication network 5, and stores the information in production scheduler 60 thereof.

When information including conditions for user C2 to use surplus production equipment 10 owned by owner C1 is stored in production scheduler 60 of owner C1 and production scheduler 60 of user C2, wireless communication module 22 of owner C1 side and wireless communication module 32 of user C2 side can be communicably connected via wireless communication network 40. In this case, remote control controller 31 of integrated production system 30 of user C2 is communicably connected to line management server LCU 20 of owner C1, and is remotely connected to machine controller 15 that controls surplus production equipment 10 rented to user C2 and intended to be used, so that surplus production equipment 10 can be remotely controlled. With this remote control, the product of user C2 is produced using surplus production equipment 10 of owner C1.

### 3. Advantageous Effects

As described above, in production equipment sharing system 1 of the present embodiment, the server of owner C1 who owns production equipment 10 provides the rental condition for renting production equipment 10 to another person to management server 50 via communication network 5, and the server of user C2 who wants to use production equipment 10 provides the use condition for using production equipment 10 owned by another person to management server 50 via communication network 5.

Then, management server 50 determines user C2 who is to use surplus production equipment 10 owned by owner C1 based on the rental condition provided by owner C1 of production equipment 10 and the use condition provided by user C2 who wants to use production equipment 10, and performs the matching processing of associating owner C1 of surplus production equipment 10 and the user. Then, management server 50 performs the rental processing between owner C1 and user C2 associated by the matching processing, and performs the billing processing therebetween.

When the rental processing and the billing processing are performed, user C2 side can then remotely connect to owner C1 side to remotely use surplus production equipment 10 of owner C1, and the product can be produced using surplus production equipment 10.

With production equipment sharing system 1, user C2 can borrow surplus production equipment 10 from owner C1 who owns production equipment 10 to produce the product. Therefore, even when the scale (that is, the number of production lines, the production speed, and the like) of production equipment 10 installed in the factory of user C2 is insufficient for the production amount of the product desired by user C2 or user C2 does not have the factory of user C2 or the sufficient production equipment 10, the production amount desired by user C2 can be secured.

In addition, user C2 can produce the product using surplus production equipment 10 of owner C1 in a state where surplus production equipment 10 is installed in the factory of owner C1. Therefore, unlike a configuration in which production equipment 10 (so-called rental item) rented to user C2 is installed in the factory of user C2 to perform product production, it is not necessary to secure a space for installing production equipment 10 in the factory of user C2, and installation work of installing production equipment 10 which is the rental item in the factory of user C2, adjustment work during installation, connection work of electric wiring, air piping, and the like to production equipment 10, removal work after using the rental item, and the like are not necessary. Accordingly, the product production can be easily achieved.

In addition, since user C2 can produce the product in a spot manner even in a short period, the production can be increased in accordance with the maximum production amount in the peak period of the product, and on the contrary, it is not necessary for user C2 to own production equipment 10 having the scale in accordance with the maximum production amount during the peak period, the investment burden of production equipment 10 can be reduced, and the work burden can be reduced. Accordingly, the production amount of the product can be flexibly adjusted according to the variation of the order quantity without forcing the investment burden or the work burden of production equipment 10 to user C2, and thus, it is possible to reduce the opportunity for user C2 to discontinue the order reception of the product from the customer due to the shortage of production equipment 10.

In addition, for owner C1, surplus production equipment 10 owned by owner C1 can be rented to the user for charge. Therefore, it is possible to increase and equalize the operating rate of production equipment 10 owned by owner C1, and it is possible to increase the profit using surplus production equipment 10 while efficiently using surplus production equipment 10.

Therefore, with production equipment sharing system 1, production equipment 10 is appropriately shared between owner C1 and user C2, specifically, production equipment 10 of owner C1 who owns production equipment 10 is rented to user C2 for charge, and thus it is possible to achieve both an increase in production in the peak period and an increase in an operating rate of production equipment 10 in an off-period.

Here, as described above, it is conceivable that user C2 who does not have a factory or has a narrow factory but wants to increase the production of product uses surplus production equipment 10 of owner C1 who wants to increase the operating rate in an off-period. Accordingly, user C2 who does not have factory or has a narrow factory but wants to increase the production of the product can produce the product by production equipment 10 of another manufacturer or the like without expanding the factory, and owner C 1 who wants to increase the operating rate of production equipment 10 in the off-period can increase the operating rate of production equipment 10 in the off-period while responding to the increase in the production in the peak period.

However, in general, since user C2 and owner C1 are present in places separated from each other, it is necessary to secure communication between user C2 and owner C1 in order for user C2 to remotely control production equipment 10 of owner C1, but when a delay occurs in the communication, there is a possibility that user C2 will not be able to remotely control production equipment 10 of owner C1 in real time.

In production equipment sharing system 1, remote control controller 31 owned by user C2 remotely controls production equipment 10 of owner C1 rented to user C2 by the rental processing in management server 50. The remote control is achieved by communication connection between wireless communication module 22 of owner C1 side and wireless communication module 32 of user C2 side via wireless communication network 40. As described above, wireless communication network 40 is a high-speed large-capacity 5G communication network system or a 6G communication network system.

With this configuration, the remote control of surplus production equipment 10 of owner C1 by remote control controller 31 of user C2 can be achieved at a high speed and with a large capacity and a low delay, and user C2 can control surplus production equipment 10 in real time to produce the product while monitoring surplus production equipment 10 of owner C1. Therefore, production equipment 10 of owner C1 who is present at a place away from user C1 can be handled as if production equipment 10 is installed in the factory owned by user C2, and product production can be ensured in the same manner as when user C2 controls production equipment 10 of user C2 in the factory of user C2. In addition, for user C1, production equipment 10 of owner C1 can be handled in the same manner as production equipment 10 of the factory of user C2 without increasing the scale of the factory of user C2 in which production equipment 10 is installed, and increase in production of products can be achieved.

Remote control controller 31 may also serve as a machine controller that controls operations of feeder 12a, mounting head 13a, and conveyance unit 14 of component mounter 10a that is production equipment 10 owned by user C2. With this combination, user C2 can handle production equipment 10 of owner C1 as if production equipment 10 owned by owner C1 is installed in the factory of user C2, and it is possible to avoid a difference between production equipment 10 owned by user C2 and production equipment 10 owned by owner C1 when user C2 handles production equipment 10.

Remote control controller 31 is remotely connected to machine controller 15 that controls production equipment 10 owned by owner C1 through encrypted communication using wireless communication network 40. With this configuration, since remote control of production equipment 10 owned by owner C1 by user C2 side can be achieved while ensuring confidentiality between owner C1 side and user C2 side, when user C2 produces the product using production equipment 10 owned by owner C1, it is possible to prevent a lot of information from being known to owner C1, and the confidentiality of the product production is ensured for user C2.

Warehouse 10b owned by owner C1 may be a dedicated warehouse provided for each production equipment 10. In a case where warehouse 10b is a dedicated warehouse for each production equipment 10, when user C2 produces the product using production equipment 10 owned by owner C1, it is possible to manage the confidentiality and the quality of components and products stored in warehouse 10b used by user C2 side without being known to owner C1 side.

### 4. Modified Embodiment

Here, in the above embodiment, since production equipment 10 which is rented to and used by user C2 is the equipment owned by owner C1, generally, a worker on owner C1 side performs maintenance of production equipment 10, a response to a failure, or the like. However, the present description is not limited thereto, and maintenance of production equipment 10 of owner C1 side which is rented to and used by user C2, a response to a failure, or the like may be performed by an operator such as a device manufacturer who operates and manages management server 50, or a specialist who exclusively handles the maintenance, or the like, instead of owner C1 or user C2. Maintenance and failure handling of production equipment 10 may be performed for a fee, and the fee may be charged to user C2.

In the above embodiment, remote control controller 31 on user C2 side remotely controls production equipment 10 owned by owner C1 using wireless communication network 40 which is a 5G communication network system or a 6G communication network system. However, the present description is not limited thereto, and wireless communication network 40 may be a system other than the 5G communication network system and the 6G communication network system, or owner C1 side and user C2 side may be communicably connected to each other through a high-speed, large-capacity, low-delay wired network.

In the above embodiment, owner C1 owns the entire production line as production equipment 10. However, the present description is not limited thereto, and in a case where devices and equipment (for example, warehouse 10b, conveyance unit 14, and the like) that can be provided to user C2 among production equipment 10 owned by owner C1 are insufficient, a third party such as a device manufacturer or a rental company of the device may carry the insufficient devices and equipment into the factory of owner C1 to be rented to user C2. In this case, the device and equipment may be rented from the third party to user C2 with charge, and user C2 may pay the fee to the third party.

It should be noted that the present invention is not limited to the above-described embodiment and modifications, and various further modifications can be made without departing from the spirit and scope of the present invention.

### Reference Signs List

1: production equipment sharing system, 5: communication network, 10: production equipment, 10a: component mounter, 15: machine controller, 19: substrate, 20: line management server LCU, 22: wireless communication module, 30: integrated production system, 31: remote control controller, 32: wireless communication module, 40: wireless communication network, 50: management server, 51: matching section, 52: rental management section, 53: billing processing section, 60: production scheduler, C1: owner, C2: user

## Claims

1. A production equipment sharing system comprising:
a rental management section provided in a management server and configured to perform rental processing of renting first production equipment from an owner who owns the first production equipment to a user who remotely uses the first production equipment; and
a billing processing section provided in the management server and configured to perform billing processing of paying a usage fee from the user to the owner based on the rental of the first production equipment.

2. The production equipment sharing system according to Claim 1, further comprising a matching section provided in the management server and configured to perform matching processing for associating the owner and the user based on a rental condition of the first production equipment provided by the owner and a use condition of the first production equipment provided by the user.

3. The production equipment sharing system according to Claim 2, wherein rental management section performs the rental processing between the owner and the user associated by the matching processing, and
the billing processing section performs the billing processing between the owner and the user associated by the matching processing.

4. The production equipment sharing system according to any one of Claims 1 to 3, further comprising a remote control controller owned by the user and configured to remotely control the first production equipment rented by the rental processing.

5. The production equipment sharing system according to Claim 4, wherein the remote control controller is also used as a user-side controller configured to control second production equipment owned by the user.

6. The production equipment sharing system according to Claim 4 or 5, wherein the remote control controller is remotely connected to an owner-side controller configured to control the first production equipment by encrypted communication.

7. The production equipment sharing system according to any one of Claims 4 to 6, wherein the remote control controller remotely controls the first production equipment by communication using a 5G communication network system.

8. The production equipment sharing system according to any one of Claims 1 to 7, wherein the first production equipment includes a warehouse dedicated to a component for use in a product produced by the user using the first production equipment.

9. The production equipment sharing system according to any one of Claims 1 to 8, wherein the first production equipment includes a component mounter configured to mount an electronic component on a substrate.

10. A production equipment sharing method comprising:
a first step in which a management server performs rental processing of renting first production equipment from an owner who owns the first production equipment to a user who remotely uses the first production equipment; and
a second step in which the management server performs billing processing of paying a usage fee from the user to the owner based on the rental of the first production equipment.
